# EUROPÄISCHE PATENTSCHRIFT

(11) **EP 2 384 489 B1**
(45) Veröffentlichungstag und Bekanntmachung des Hinweises auf die Patenterteilung: **04.05.2016**
(21) Anmeldenummer: 09774887.5
(22) Anmeldetag: 10.12.2009
(51) Int. Cl.: G06Q 10/00, G08G 1/123, G06Q 10/08

(54) **VERFAHREN UND SYSTEM ZUR PLANUNG DER FAHRTROUTE EINES TRANSPORTFAHRZEUGS**
METHOD AND SYSTEM FOR PLANNING THE TRAVEL ROUTE OF A TRANSPORT VEHICLE
PROCÉDÉ ET SYSTÈME DE PLANIFICATION D'ITINÉRAIRE D'UN VÉHICULE DE TRANSPORT

(30) Priorität: 30.12.2008 DE 102008063377
(43) Veröffentlichungstag der Anmeldung: 09.11.2011
(73) Patentinhaber: Deutsche Post AG, 53113 Bonn (DE)
(72) Erfinder: PAUL, Boris, 53115 Bonn (DE); ULRICH, Keith, 53227 Bonn-Oberkassel (DE)
(74) Vertreter: Jostarndt, Hans-Dieter
(86) Internationale Anmeldenummer: PCT/EP2009/066823
(87) Internationale Veröffentlichungsnummer: WO 2010/076146

(56) Entgegenhaltungen:
- EP-A- 1 583 015

## Beschreibung

Die Erfindung betrifft ein Verfahren zur Planung der Fahrtroute eines Transportfahrzeugs, mit dem mehrere Transportgüter transportiert werden, wobei die Routenplanung wenigstens anhand der Zieladressen der Transportgüter erfolgt und jedes Transportgut mit einem RFID-Transponder versehen ist.

Die Erfindung betrifft ferner ein zugehöriges Transportfahrzeug zur Durchführung des Verfahrens.

Im Bereich der Zustellung von Sendungen durch Logistikunternehmen wird täglich eine Vielzahl von Sendungen von Versendern über Verteilzentren zu Empfängern transportiert. Dabei kommen Transportfahrzeuge zur Anwendung, deren Fahrtroute täglich anhand der auszuliefernden Sendungen festgelegt wird. Diese Routenplanung umfasst jedoch lediglich die Bestimmung des kürzesten oder schnellsten Weges für die Auslieferung von Sendungen mit bestimmten Zieladressen, wobei für die Routenplanung statische Informationen verarbeitet werden. Die so errechnete Route wird dem Fahrer des Transportfahrzeugs vorzugsweise über eine Art Navigationssystem angezeigt, so dass er Sendungen in der vorgegebenen Reihenfolge abliefern kann und ihm dabei der Weg über die errechnete Route angegeben wird.

Dynamische Informationen wie Verkehrsstaus, Baustellen oder ungünstige Wetterbedingungen wie Glatteis werden bei der Routenplanung jedoch nicht berücksichtigt. Die Route für einen Tag wird vielmehr anhand der morgens vorliegenden Sendungen festgelegt und kann daraufhin nicht mehr verändert werden. Ob der Fahrer des Transportfahrzeugs sich an die vorgegebene Route hält oder aufgrund aktueller Bedingungen eine andere Route wählt, kann nicht wiedergegeben werden, wenn keine Nachverfolgung des Fahrzeugs beispielsweise über GPS erfolgt. Auch Erfahrungswerte des Fahrers, wie eine Route schneller zu gestalten ist, können nicht berücksichtigt werden, was sich nachteilig auf die allgemeine Routenoptimierung auswirkt.

Soll der Fahrer auf seinem Weg ad hoc beispielsweise eine Eilsendung bei einem Versender abholen, kann dies ebenfalls nicht berücksichtigt werden, indem die Route verändert wird bzw. zuvor das Transportfahrzeug ermittelt wird, welches für die Abholung geeignet ist. Dabei ist auch zu berücksichtigen, dass üblicherweise nicht bekannt ist, welche Sendungen ein Fahrer zu einem bestimmten Zeitpunkt geladen hat, welche bereits ausgeliefert wurden und welche neu hinzugekommen sind. Die aktuellen Ladungszustände von Fahrzeugen und deren Auslastung sind ebenfalls nicht bekannt.

Es ist jedoch wünschenswert, zur Behebung dieser Defizite üblicher Routenplanungen Systeme bereitzustellen, welche eine hochgradig dynamische Routenplanung ermöglichen. Aufgabe der Erfindung ist es daher, ein Verfahren und ein zugehöriges Transportfahrzeug zur Planung der Fahrtroute des Transportfahrzeugs bereitzustellen, mit denen sich eine solche hochgradig dynamische Routenplanung realisieren lässt.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüche 2-7. Die Aufgabe wird ferner durch ein System nach Anspruch 8 gelöst.

Die Erfindung umfasst ein Verfahren zur Planung der Fahrtroute eines Transportfahrzeugs, mit dem mehrere Transportgüter transportiert werden, wobei die Routenplanung wenigstens anhand der Zieladressen der Transportgüter erfolgt und jedes Transportgut mit einem RFID-Transponder versehen ist. Dabei bestimmen RFID-Antennen am Transportfahrzeug die Beladung des Transportfahrzeugs, indem der jeweilige RFID-Transponder der Transportgüter innerhalb des Transportfahrzeugs erfasst wird. Die Routenplanung wird dynamisch aufgrund von aktuellen Verkehrsbedingungen und neu in das Transportfahrzeug geladenen Transportgütern verändert.

Vorzugsweise erfolgt die dynamische Routenplanung in einer zentralen Datenverwaltungseinheit, und eine jeweils aktualisierte Route wird von der zentralen Datenverwaltungseinheit an ein Navigationssystem des Transportfahrzeugs übermittelt.

Von der Erfindung umfasst ist wenigstens ein Transportfahrzeug zur Durchführung eines solchen Verfahrens, bei dem der Innenraum des Transportfahrzeugs mit mehreren RFID-Antennen ausgestattet ist, welche so ausgeführt sind, dass RFID-Transponder im gesamten Innenraum erfasst werden können.

Vorteile, Besonderheiten und zweckmäßige Weiterbildungen der Erfindung ergeben sich aus den Unteransprüchen und der nachfolgenden Darstellung bevorzugter Ausführungsbeispiele.

Die Erfindung kombiniert auf vorteilhafte Weise zwei Aspekte. Zum einen erfolgt eine dynamische Routenplanung, die täglich anhand von wirklich für ein Transportfahrzeug bestimmten Transportgütern erfolgen kann. Dies kann ein Mehrstop-Routing auf der Ebene von Straßen oder sogar Hausnummern beinhalten. Die dynamische Routenplanung kann aktuelle Verkehrsbedingungen wie Staus, aber auch Wetterbedingungen wie Glatteis, berücksichtigen. Die aktuellen Verkehrsbedingungen können von Dienstleistern oder von anderen Transportfahrzeugen einer Fahrzeugflotte bereitgestellt werden. Hierbei können insbesondere Fahrzeugflotten der Polizei, Taxis oder eigene Transportfahrzeuge des Logistikunternehmens genutzt werden.

Die dynamische Routenplanung wird dem Fahrer eines Fahrzeugs vorzugsweise über ein Navigationssystem dargestellt.

Die Verwendung der RFID-Technologie ermöglicht es, die Beladungszustände eines Transportfahrzeugs zu jedem Zeitpunkt für eine Routenplanung zur Verfügung zu haben. Jede Beladung und Entladung kann registriert werden. Insbesondere kann daraus die aktuelle Kapazität eines Fahrzeugs bestimmt werden, um ad hoc-Abholungen während der Route einplanen zu können.

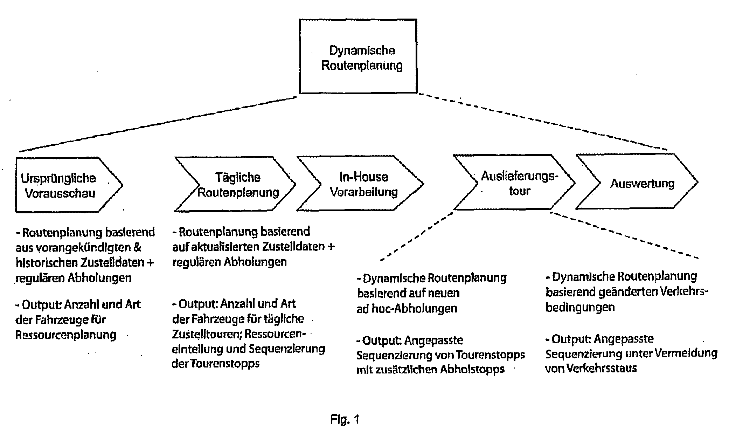

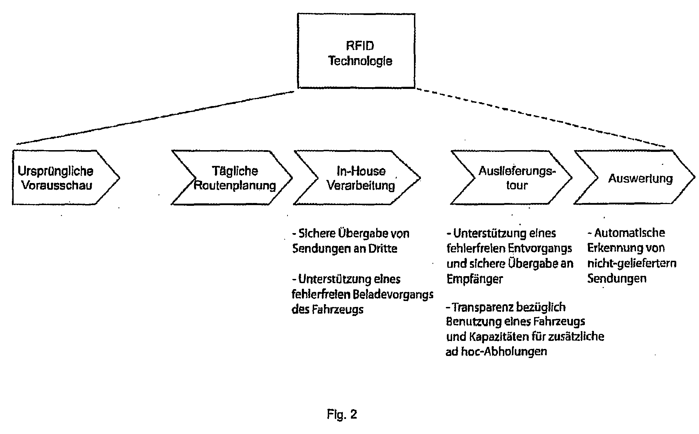

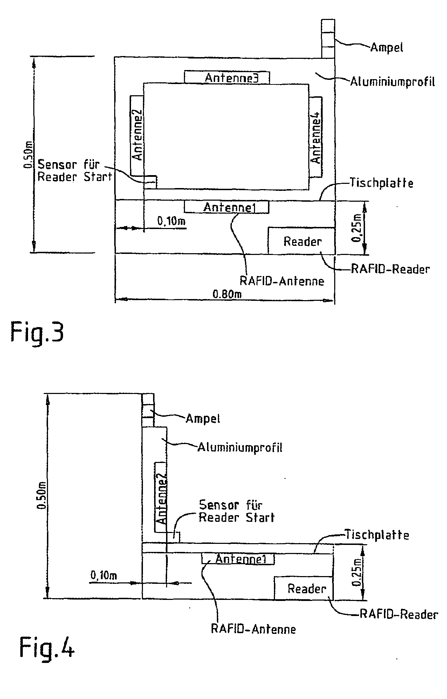

Bevor Sendungen in ein Transportfahrzeug geladen werden, müssen die zugehörigen RFID-Etiketten erfasst werden. Um im produktiven Betrieb in Echtzeit, die Karton-Etiketten und ggf. darin befindliche Artikel-Etiketten zu erfassen, kann ein spezieller RFID-Packtisch verwendet werden. Zwei Varianten dieses Tisches sind schematisch in den Figuren 3 und 4 dargestellt. Das System besteht aus folgenden Komponenten:
- Aluminium Rahmenprofil,
- RFID-Reader, Antennen, Sensoren (z.B. Lichtschranke), Ampel,
- IPC zur Steuerung und Anzeige.

Dabei ist als Prozess vorgesehen, dass eine mit RFID-Tag gelabelte Sendung durch das RFID-Gate geschoben wird. Der Leseprozess wird mittels Sensor (z.B. Lichtschranke) ausgelöst und mit einem gelben Licht signalisiert. Nach positiver Erfassung wird dies mit einem grünen Licht signalisiert, und zusätzlich wird das Leseergebnis an einem Terminal angezeigt. Wird beim Leseprozess kein Label erkannt, wird dies mit einem roten Licht signalisiert.

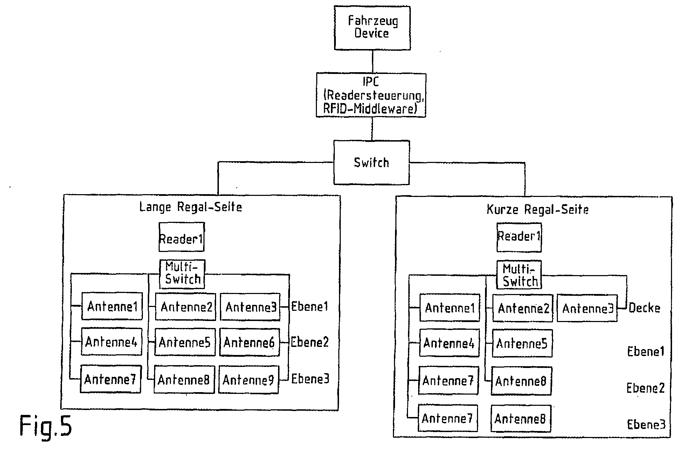

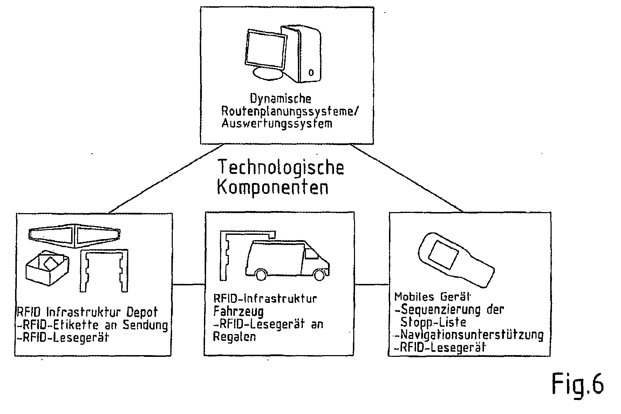

Um Sendungen innerhalb eines Transportfahrzeugs zu erfassen, wird im produktiven Betrieb eine entsprechende RFID-Fahrzeugausstattung verwendet. Diese Fahrzeugausstattung ist schematisch in Figur 5 dargestellt. Diese RFID-Lösung ermöglicht in Echtzeit, den aktuellen Beladezustand des Fahrzeug mittels einer speziellen RFID-Lösung zu erfassen und mögliche Differenzen dem Fahrer oder der zentralen Disposition mitzuteilen. Das System besteht aus folgenden Komponenten:
- RFID-Ausstattung (Reader und Antennen) für die beiden Regaleinheiten im Fahrzeug,
- Ampel und ggf. Monitor zur Visualisierung,
- IPC zur Datenverarbeitung,
- RFID-Edgeware zur Readersteuerung.

Dabei ist als Prozess vorgesehen, dass eine initiale Beladung des Fahrzeugs und damit eine Erfassung aller RFID-Tags der geladenen Sendungen erfolgt, woraufhin sich ein Transport anschließt. Dann erfolgt eine Auslieferung einer Sendung, wodurch sich der Beladezustand ändert. Auch bei der Abholung einer Sendung bei einem Versender ändert sich der Beladezustand, was von den Antennen registriert wird.

Die einzelnen Prozessschritte werden im Folgenden stichwortartig erläutert

### Initiale Beladung:

- IPC erhält Beladeliste (Soll-Liste) vom Fahrzeugterminal.
- Die Ladeliste enthält die eindeutige Shipment-ID (Sendungs-Identifikation), welche auch auf dem RFID-Tag gespeichert wird.
- Das Fahrzeug wird schrittweise durch den Fahrer beladen.
- Während der Beladung ermittelt die RFID-Infrastruktur im Fahrzeug ständig den Ladezustand.
- Der Ladezustand wird regelmäßig an das Fahrzeug-Device übermittelt.
- Die schrittweise Beladung kann mittels einer Ampel und mit einem Monitor visualisiert werden.

### Transport:

- Während des Transportes ermittelt die RFID-Infrastruktur im Fahrzeug ständig den Ladezustand
- Der Ladezustand wird regelmäßig an das Fahrzeug-Device übermittelt

### Auslieferung:

- Fahrzeug-Device schickt eine neue Sollliste (enthält nicht mehr die auszuladenden Sendungen) an den IPC
- Der Fahrer entnimmt die auszuladende Sendung
- Während der Auslieferung ermittelt die RFID-Infrastruktur im Fahrzeug ständig den Ladezustand
- Der Ladezustand wird regelmäßig an das Fahrzeug-Device übermittelt
- Die Auslieferung kann mittels einer Ampel und mit einem Monitor visualisiert werden
- Nach Auslieferung aller Sendungen muss ein Zusteller keine Formulare ausfüllen, bei seinem Depot abgeben, etc., da alle Vorgänge bereits registriert wurden.

### Abholung:

- Der Fahrer übernimmt eine neue Sendung beim Absender.
- Der Fahrer taggt die Sendung mit einem vorbereiteten RFID-Tag (Programmiert mit einer zu definierenden Nummer, die als Klartext und Barcode auf dem Tag aufgedruckt wird).
- Der Fahrer scannt oder gibt manuell die Tagnummer in sein Handheld ein und verheiratet dabei den Tag mit der Airway-Bill-Nummer (AWB-Nummer).
- Das Fahrzeug-Device sendet eine neue Soll-Liste (enthält die übernommene Sendung) an den IPC.
- Der Fahrer lädt die neue Sendung in Fahrzeug ein.
- Während der Beladung ermittelt die RFID-Infrastruktur im Fahrzeug ständig den Ladezustand.
- Der Ladezustand wird regelmäßig an das Fahrzeug-Device übermittelt.
- Die Beladung kann mittels einer Ampel und mit einem Monitor visualisiert werden.

Das Transportfahrzeug steht vorzugsweise in ständiger Verbindung zu einer zentralen Datenverwaltungseinheit, in der die Daten aller Transportfahrzeuge verarbeitet werden. Diese Verbindung kann beispielsweise über GSM erfolgen. Die Position eines Fahrzeugs kann ferner über eine Satellitenortung ermittelt werden.

Die erfindungsgemäße dynamische Routenplanung soll den aktuellen Status von Straßen berücksichtigen und Transportfahrzeuge von Straßen mit dichtem Verkehr fernhalten. Insbesondere in städtischen Gebieten ist der aktuelle Status von Straßen jedoch oftmals nicht oder nur sehr ungenau bekannt. Für Autobahnen bestehen Verkehrsüberwachungssysteme, über welche der Status fortlaufend abgerufen werden kann. Für innerstädtische Straßen oder Landstraßen ist dies jedoch nicht gegeben. Die dynamische Routenplanung mit aktuellen Verkehrsinformationen wird daher insbesondere in städtischen Gebieten immer mehr zum Hauptfaktor für effiziente und umweltfreundliche Logistiksysteme.

Bei der dynamischen Routenplanung ist eine Vielzahl von Faktoren zu berücksichtigen. Dazu zählen beispielsweise Zeitfenster für Abholungen und Lieferungen, freie Kapazitäten von Transportfahrzeugen, Informationen über Verkehrsstaus, Baustellen, gesetzliche Regulierungen wie Maustrecken oder z.B. innerstädtische Zufahrtskontrollen. Ferner ist zu berücksichtigen, ob Fahrzeuge für bestimmte Lieferungen wie beispielsweise Medikamente oder Lebensmittellieferungen geeignet sind. Ferner können Wetterbedingungen berücksichtigt werden.

Moderne Fahrzeugflotten, z. B. der Polizei, DHL oder Busse und Taxis, sind in der Lage, die aktuelle Verkehrssituation in ihrem Bereich zu erfassen, aufzuzeichnen und für eine dynamische Routenplanung bereitzustellen. Diese Informationen können an die zentrale Datenverarbeitungseinheit oder direkt an andere Fahrzeuge übermittelt werden. Dabei können so genannte "meshed networks" zur Anwendung kommen.

Wird eine zentrale Datenverarbeitungseinheit eingesetzt, werden dieser auch Fahrzeuginformationen wie Geschwindigkeit, Beschleunigung, Beladung und Gewicht übermittelt.

Das erfindungsgemäße Transportfahrzeug mit einer vollständigen RFID-Ausleuchtung des Fahrzeuginnenraums wendet sich ab von Lösungen, bei denen ein Fahrzeug durch ein RFID-Gate fährt, um alle darin befindlichen RFID-Tags zu lesen, da dies mit erheblichen Lesefehlern behaftet ist. Die gezielte Anbringung von RFID-Lesegeräten an allen Regalen eines Fahrzeugs ermöglicht dagegen eine zuverlässige Erfassung von jeglichen RFID-Tags, die sich im Fahrzeuginnenraum befinden.

In einem Ausführungsbeispiel der Erfindung erfolgt über RFID-Technologie in Kombination mit einer Bestimmung der Position eines Transportfahrzeugs (z.B. GPS-Koordinaten) auch eine Überwachung der Auslieferung von Sendungen an einer Zieladresse. Beispielsweise darf eine Sendung nur aus dem Fahrzeug entnommen (und dann ausgeliefert werden), wenn sich das Fahrzeug in einem bestimmten Umkreis zu einer Zieladresse befindet. Anderenfalls erfolgt ein Alarm bzw. eine Benachrichtigung der zentralen Datenverwaltungseinheit. Hierbei kann jedoch auch vorgesehen sein, dass die Routenplanung vorsieht, dass mehrere Sendungen, die für Adressen in einem bestimmten Bereich vorgesehen sind, gleichzeitig aus dem Fahrzeug entnommen werden dürfen, ohne dass dies einen Alarm auslöst. Liegen Zieladressen von mehreren Sendungen beispielsweise in einer Straße, kann es von der Routenplanung errechnet worden sein, dass es zeitlich günstiger ist, für das Fahrzeug nur einen Stopp vorzusehen, bei welchem der Zusteller die mehreren Sendungen zu Fuß ausliefert.

## Patentansprüche

1. Verfahren zur Planung der Fahrtroute eines Transportfahrzeugs, mit dem mehrere Transportgüter transportiert werden, wobei die Routenplanung wenigstens anhand der Zieladressen der Transportgüter erfolgt und dynamisch aufgrund von aktuellen Verkehrsbedingungen und neu in das Transportfahrzeug geladenen Transportgütern verändert wird und wobei jedes Transportgut mit einem RFID-Tag versehen ist und RFID-Antennen am Transportfahrzeug die Beladung des Transportfahrzeugs bestimmen, indem der jeweilige RFID-Tag der Transportgüter innerhalb des Transportfahrzeugs erfasst wird,
**dadurch gekennzeichnet,**
**dass** die zu den Transportgütern zugehörigen RFID-Tags vor der Beladung des Transportfahrzeugs mittels eines Leseprozesses auf einem RFID-Packtisch erfasst werden, wobei der Packtisch einen RFID-Reader und mehrere am Packtisch angeordnete Antennen zum Erfassen der RFID-Tags umfasst.

2. Verfahren nach Anspruch 1,
**dadurch gekennzeichnet,**
**dass** das mit einem RFID-Tag versehene Transportgut für den Leseprozess durch ein RFID-Gate des Packtisches geschoben wird.

3. Verfahren nach Anspruch 2,
**dadurch gekennzeichnet,**
**dass** der Leseprozess mittels einer Lichtschranke ausgelöst wird.

4. Verfahren nach Anspruch 3,
**dadurch gekennzeichnet,**
**dass** die positive Erfassung des RFID-Tags mit einem grünen Licht signalisiert wird.

5. Verfahren nach Anspruch 3 oder 4,
**dadurch gekennzeichnet,**
**dass** das Leseergebnis zusätzlich an einem Terminal angezeigt wird.

6. Verfahren nach einem der Ansprüche 3 bis 5,
**dadurch gekennzeichnet,**
**dass** ein rotes Licht signalisiert, dass beim Leseprozess kein Label erkannt wurde.

7. Verfahren nach einem der voranstehenden Ansprüche,
**dadurch gekennzeichnet,**
**dass** die dynamische Routenplanung in einer zentralen Datenverwaltungseinheit erfolgt und eine jeweils aktualisierte Route von der zentralen Datenverwaltungseinheit an ein Navigationssystem des Transportfahrzeugs übermittelt wird.

8. Ein System mit einem Transportfahrzeug mit dem mehreren Transportgüter transportiert werden, und ein Packtisch zur Erfassung von RFID-Tags zum Einsatz in dem Verfahren nach Anspruch 1.

9. System nach Anspruch 8,
**dadurch gekennzeichnet,**
**dass** der Packtisch ein RFID-Gate zum Lesen der mit einem RFID-Tag gelabelten Transportgüter umfasst.

10. System nach Anspruch 8 oder 9,
**dadurch gekennzeichnet,**
**dass** der Packtisch einen Sensor zum Auslösen des Leseprozesses für die RFID-Tags umfasst.

11. System nach einem der Ansprüche 8 bis 10,
**dadurch gekennzeichnet,**
**dass** der Packtisch eine Ampel zum Anzeigen des Leseergebnisses des Leseprozesses umfasst.

12. System nach einem der Ansprüche 8 bis 11,
**dadurch gekennzeichnet,**
**dass** der RFID-Reader unterhalb der Tischplatte des Packtisches angeordnet ist.

13. System nach einem der Ansprüche 8 bis 12,
**dadurch gekennzeichnet,**
**dass** eine der Antennen oberhalb und eine der Antennen unterhalb der Tischplatte des Packtisches angeordnet sind.

## Claims

1. A method for planning the travel route of a transport vehicle by means of which a plurality of transported items are transported, whereby the route planning takes place at least on the basis of the destination addresses for the transported items, and said route planning is changed dynamically on the basis of momentary traffic conditions and on the basis of items that have been newly loaded into the transport vehicle, and whereby each transported item is provided with an RFID tag, and RFID antennas on the transport vehicle determine the load of the transport vehicle in that the individual RFID tags of the transported items are scanned inside the transport vehicle,
**characterized in that**
before the transport vehicle is loaded, the RFID tags belonging to the transported items are scanned within the scope of a reading process on an RFID packing bench, whereby the packing bench has an RFID reader and several antennas arranged on the packing bench to scan the RFID tags.

2. The method according to claim 1,
**characterized in that**
the transported item that has been provided with an RFID tag is pushed through an RFID gate of the packing bench in order to undergo the reading process.

3. The method according to claim 2,
**characterized in that**
the reading process is triggered by means of a light barrier.

4. The method according to claim 3,
**characterized in that**
the positive scanning of the RFID tag is indicated by a green light.

5. The method according to claim 3 or 4,
**characterized in that**
the reading result is additionally displayed on a terminal.

6. The method according to one of claims 3 to 5,
**characterized in that**
a red light indicates that no label was detected during the reading process.

7. The method according to one of the preceding claims,
**characterized in that**
the dynamic route planning is carried out in a central data management unit and, in each case, an updated route is transmitted from the central data management unit to a navigation system in the transport vehicle.

8. A system comprising a transport vehicle by means of which a plurality of transported items are transported, and a packing bench for scanning RFID tags for use in the method according to claim 1.

9. The system according to claim 8,
**characterized in that**
the packing bench comprises an RFID gate for reading the transported items that have been labeled with an RFID tag.

10. The system according to claim 8 or 9,
**characterized in that**
the packing bench comprises a sensor for triggering the reading process for the RFID tags.

11. The system according to one of claims 8 to 10,
**characterized in that**
the packing bench comprises a traffic light for displaying the reading result of the reading process.

12. The packing bench according to one of claims 8 to 11,
**characterized in that**
the RFID reader is arranged below the counter top of the packing bench.

13. The system according to one of claims 8 to 12,
**characterized in that**
one of the antennas is arranged above the counter top of the packing bench and one of the antennas is arranged below the counter top of the packing bench.

## Revendications

1. Procédé de planification de l'itinéraire d'un véhicule de transport servant à transporter plusieurs marchandises transportées, la planification d'itinéraire s'effectuant au moins à l'aide des adresses de destination des marchandises transportées et étant modifiée dynamiquement sur la base de conditions de trafic actuelles et de marchandises transportées nouvellement chargées sur le véhicule de transport, et chaque marchandise transportée étant équipée d'un tag RFID et des antennes RFID sur le véhicule de transport déterminant le chargement du véhicule de transport par le fait que le tag RFID respectif des marchandises transportées est détecté dans le véhicule de transport, **caractérisé en ce que** les tags RFID associés aux marchandises transportées sont détectés avant le chargement du véhicule de transport au moyen d'un processus de lecture sur une table d'emballage RFID, la table d'emballage comprenant un lecteur RFID et plusieurs antennes agencées sur la table d'emballage pour détecter les tags RFID.

2. Procédé selon la revendication 1, **caractérisé en ce que** la marchandise transportée pourvue d'un tag RFID est déplacée, pour le processus de lecture, par un portique RFID de la table d'emballage.

3. Procédé selon la revendication 2, **caractérisé en ce que** le processus de lecture est déclenché au moyen d'une barrière photoélectrique.

4. Procédé selon la revendication 3, **caractérisé en ce que** la détection positive du tag RFID est signalée par une lumière verte.

5. Procédé selon la revendication 3 ou 4, **caractérisé en ce que** le résultat de la lecture est affiché sur un terminal.

6. Procédé selon l'une des revendications 3 à 5, **caractérisé en ce qu'**une lumière rouge signale qu'aucun câble n'a été reconnu lors du processus de lecture.

7. Procédé selon l'une des revendications précédentes, **caractérisé en ce que** la planification d'itinéraire dynamique s'effectue dans une unité centrale de gestion de données et un itinéraire respectivement mis à jour est transmis par l'unité centrale de gestion de données à un système de navigation du véhicule de transport.

8. Système comportant un véhicule de transport permettant le transport de plusieurs marchandises transportées et une table d'emballage pour détecter des tags RFID pour mise en oeuvre dans un procédé selon la revendication 1.

9. Système selon la revendication 8, **caractérisé en ce que** la table d'emballage comprend un portique RFID pour lire les marchandises transportées portant un tag RFID.

10. Système selon la revendication 8 ou 9, **caractérisé en ce que** la table d'emballage comprend un capteur pour déclencher le processus de lecture pour les tags RFID.

11. Système selon l'une des revendications 8 à 10, **caractérisé en ce que** la table d'emballage comprend un feu de signalisation pour indiquer le résultat de lecture du processus de lecture.

12. Système selon l'une des revendications 8 à 11, **caractérisé en ce que** le lecteur RFID est situé en dessous de la plaque de table de la table d'emballage.

13. Système selon l'une des revendications 8 à 12, **caractérisé en ce qu'**une des antennes est située au dessus de la plaque de table de la table d'emballage et une des antennes, en dessous.
